# EUROPÄISCHE PATENTANMELDUNG

(11) **EP 1 145 913 A2**
(43) Veröffentlichungstag der Anmeldung: **17.10.2001**
(21) Anmeldenummer: 01250126.8
(22) Anmeldetag: 10.04.2001
(51) Int. Cl.: B60R 16/02

(54) **Bordnetz mit Spannungsstabilisierung**

(30) Priorität: 13.04.2000 DE 10019847
(71) Anmelder: Volkswagen AG, 38436 Wolfsburg (DE)
(72) Erfinder: Baumgarth, Marco, 38106 Braunschweig (DE); Revermann, Klaus, Dipl.-Ing., 38165 Lehre (DE)
(74) Vertreter: Zucker, Volker, Dipl.-Ing.

(57) **Zusammenfassung**

Die Erfindung betrifft ein Bordnetz mit Spannungsstabilisierung, umfassend mindestens eine Spannungsquelle zur Versorgung von spannungsschwankungsunempfindlichen und spannungsschwankungsempfindlichen Verbrauchern, wobei zwischen den spannungsschwankungsempfindlichen Verbrauchern und der Spannungsquelle eine Einrichtung zur Spannungsstabilisierung angeordnet ist, wobei dadurch gekennzeichnet, daß die Einrichtung (1) zur Spannungsstabilisierung Mittel zur Erfassung der Bordnetzspannung Uₑᵢₙ umfaßt, wobei über die Einrichtung (1) in Abhängigkeit von der erfaßten Bordnetzspannung Uₑᵢₙ Über- und Unterspannungen der Bordnetzspannung Uₑᵢₙ ausregelbar sind.

## Beschreibung

Die Erfindung betrifft ein Bordnetz mit Spannungsstabilisierung, umfassend mindestens eine Spannungsquelle zur Versorgung von spannungsschwankungsempfindlichen Verbrauchern.

In elektrischen Bordnetzen von Kraftfahrzeugen nimmt die Anzahl der zu versorgenden Verbraucher ständig zu. Insbesondere die Zunahme von Hochstromverbrauchern wie beispielsweise Servolenkpumpen führen dazu, daß die Bordnetzspannung stark schwankt. So bricht die Bordnetzspannung bei der Zuschaltung eines Hochstromverbrauchers kurzzeitig ein. Daher ist es bekannt, spannungsschwankungsempfindlichen Verbrauchern wie beispielsweise die Leuchten im Lichtkreis durch spannungsstabilisierende Maßnahmen zu schützen, da es ansonsten beim Spannungseinbruch zum Flackern der Leuchten käme, was aus sicherheitstechnischen Aspekten nicht akzeptabel ist. Daher ist es bekannt, die Spannungseinbrüche durch einen DC/ DC- Wandler zu kompensieren, der die schwankende Bordnetzspannung auf eine konstante höhere Lampenspannung transformiert.

Aus der DE 30 07 941 ist eine Zweispannungs- Netzanlage bei Bordnetzen von beweglichen Einheiten, insbesondere von Kraftfahrzeugen mit einem Generator mit Regler und einer zusätzlichen Starterbatterie bekannt, die für den Startvorgang mit der normalen Bordnetzbatterie in Reihe geschaltet ist, wobei ein gemeinsames elektronisches Steuergerät vorgesehen und parallel zu gegenüber Spannungsschwankungen unempfindlichen Verbrauchern an den einen vorgesehenen Generator angeschlossen ist, welches eine erste Versorgungsleitung mit konstanter Ausgangsspannung für spannungsempfindliche Verbraucher aufweist und eine zweite Versorgungsleitung, die als Ladeleitung mindestens die doppelte Generatorspannung führt und mit dem freien Pol der Starterbatterie verbunden ist. Dabei enthält das elektronische Steuergerät einen von der Bordnetzspannung gespeisten Wechselrichter mit nachgeschaltetem Transformator, der Wicklungen aufweist für die Erzeugung der Lampen- Konstantspannung und die Starterbatterie- Ladespannung. Weiter ist zur Regelung der Konstantspannung ein aktives Halbleiterschaltelement vorgesehen, dessen Stromdurchgang von einer Phasenausschnittsteuerung gesteuert ist. Durch das Steuergerät wird die 12 V Bordnetzspannung trotz Schwankungen auf eine konstante 13V-Lampenspannung hochgeregelt.

Der Erfindung liegt das technische Problem zugrunde, ein verbessertes Bordnetz mir Spannungsstabilisierung zu schaffen, bei dem der Betrieb und die Lebensdauer von spannungsschwankungsempfindlichen Verbrauchem verbessert ist.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu umfaßt die Einrichtung zur Spannungsstabilisierung Mittel zu Erfassung der Bordnetzspannung, wobei über die Einrichtung in Abhängigkeit von der erfaßten Bordnetzspannung Über- und Unterschwankungen der Bordnetzspannung ausregelbar sind. Die Erfindung geht dabei von der Erkenntnis aus, daß auf dem Bordnetz nicht nur Spannungsunterschwankungen auftreten können, sondern auch Spannungsspitzen. Diese Spannungsspitzen werden jedoch durch die bekannten Hochsetzsteller ungefiltert auf die spannungsschwankungsempfindlichen Verbraucher gegeben, was zur Reduzierung der Lebensdauer und Störungen des Betriebes führen kann. Des weiteren erlaubt diese Einrichtung auch größere Freiheitsgrade bei der Wahl der Bordnetzspannung, da nunmehr auch variable Bordnetzspannungen zwischen beispielsweise 12- 16V zulässig wären, ohne die spannungsschwankungsempfindlichen Verbraucher zu gefährden.

In einer bevorzugten Ausführungsform ist die Einrichtung zur Spannungsstabilisierung als transformatorischer Wandler ausgebildet. Hierzu wird vorzugsweise in Reihe zur Primärspule ein taktbarer Leistungsschalter angeordnet, der in Abhängigkeit von der erfaßten Bordnetzspannung getaktet wird.

Der taktbare Leistungsschalter ist dabei vorzugsweise als Halbleiterschalter, insbesondere als Feldeffekttransistor ausgebildet.

Zum Glätten der transformierten Spannung auf der Sekundärseite ist ausgangsseitig parallel zu den spannungsschwankungsempfindlichen Verbrauchern ein Kondensator oder ein Akkumulator angeordnet.

Weiter ist vorzugsweise als Spannungsshifter bzw. als Energiepumpe eine Diode zwischen der Sekundärspule und den spannungsschwankungsempfindlichen Verbrauchern angeordnet.

In einer alternativen Ausführungsform ist die Einrichtung als Aufwärts- Abwärtswandler ausgebildet. Vorzugsweise umfaßt die Einrichtung eingangsseitig einen taktbaren Leistungsschalter, zu dem in Reihe eine Parallelschaltung aus Diode mit einer Induktivität mit taktbarem Leistungsschalter angeordnet ist, wobei parallel zu den spannungsschwankungsempfindlichen Verbrauchern ein Glättungskondensator oder Akkumulator angeordnet ist und zwischen der Parallelschaltung und der Induktivität eine Diode angeordnet ist.

In einer bevorzugten Ausführungsform sind die taktbaren Leistungsschalter als Halbleiterschalter, insbesondere als Feldeffekttransistoren ausgebildet.

Die Erfindung wird nachfolgend anhand eines bevorzugten Ausführungsbeispieles näher erläutert. Die Fig. zeigen:
Fig. 1 ein Schaltbild einer Einrichtung zur Spannungsstabilisierung mit einem Aufwärts- Abwärtswandler und
Fig. 2 ein Schaltbild einer Einrichtung zur Spannungsstabilisierung mit transformatorischem Wandler.

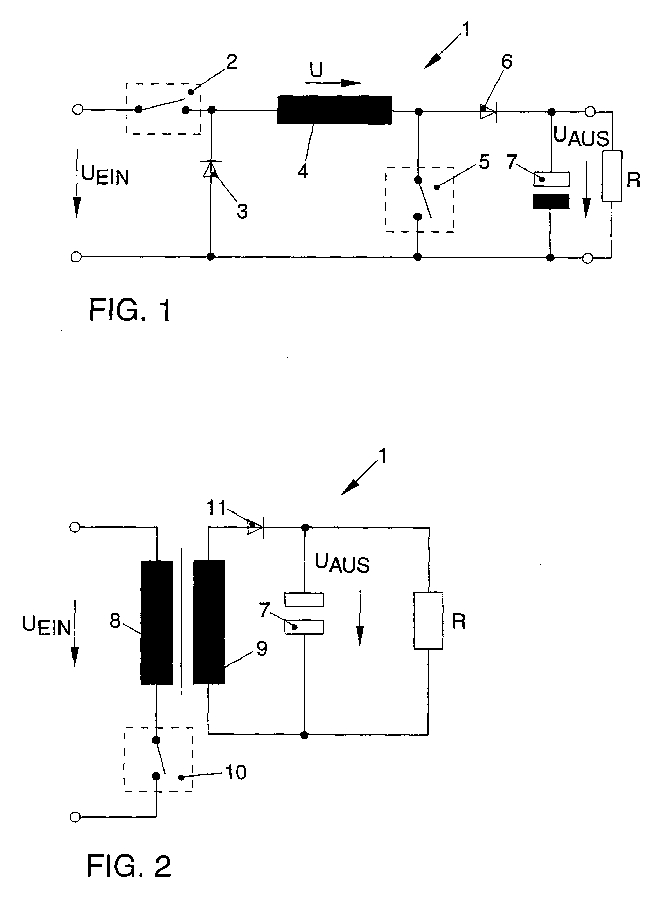

In Fig. 1 ist ein Aufwärts- Abwärtswandler als Einrichtung 1 zur Spannungsstabilisierung von spannungsschwankungsempfindlichen Verbrauchern R in einem Bordnetz dargestellt. Die Einrichtung 1 umfaßt einen taktbaren Leistungsschalter 2. Hinter dem Leistungsschalter 2 ist eine erste Diode 3 gegen Masse geschaltet und eine Induktivität 4 nachgeordnet. Hinter der Induktivität 4 ist ein zweiter, gegen Masse geschalteter Leistungsschalter 5 angeordnet. Hinter der Induktivität 4 ist weiter eine zweite Diode 6 und ein Kondensator 7 angeordnet, wobei der ausgangsseitig angeordnete Kondensator 7 parallel zu den spannungsschwankungsempfindlichen Verbrauchern R liegt. Der Kondensator 7 ist vorzugweise als Elektrolyt-Kondensator ausgebildet.

Mittels nicht weiter dargestellter Mittel wird die Bordnetzspannung Uₑᵢₙ erfaßt und an einen ebenfalls nicht dargestellten Controller übergeben, der die beiden Leistungsschalter 2 und 5 ansteuert. Entsprechend der erfaßten Bordnetzspannung Uₑᵢₙ wird die Einrichtung 1 als Aufwärts- oder als Abwärtswandler betrieben, so daß unabhängig von der Bordnetzspannung Uₑᵢₙ die Ausgangsspannung Uₐᵤₛ konstant ist.

Ergibt die Erfassung der Bordnetzspannung Uₑᵢₙ, daß diese Unterspannungen aufweist, so wird die Einrichtung 1 als Hochsetzsteller bzw. Aufwärtswandler betrieben. Hierzu schließt der nicht dargestellte Controller den ersten Leistungsschalter 2. Der zweite Leistungsschalter 5 wird durch den Controller getaktet. Durch die Taktung fließt ein sich zeitlich ändernder Strom durch die Induktivität 4, der eine Spannungsspitze an der Induktivität 4 induziert. Dadurch wird die Diode 6 in Flußrichtung gepolt und der Kondensator 7 geladen. Durch die Anzahl der Takte kann das Maß für die Ladung des Kondensator 7 und damit der Spannung Uₐᵤₛ eingestellt werden.

Wird hingegen eine Überspannung erfaßt, so wird die Einrichtung 1 als Tiefsetzsteller betrieben. Hierzu bleibt der zweite Leistungsschalter 5 offen und der erste Leistungsschalter 2 getaktet. Dadurch fließt wieder ein zeitlich veränderlicher Strom durch die Induktivität 4, der eine Spannung in der Induktivität 4 induziert, wobei die Induktivität bei geschlossenem Leistungsschalter 2 als Drossel wirkt. In der Phase mit offenem Leistungsschalter 2 wirkt die Induktivität 4 als Spannungsquelle, wobei über die erste Diode 3 der Stromkreis geschlossen wird. Aufgrund der zwei Flußspannungen über den Dioden 3 und 6 wird die resultierende Spannung an den spannungsschwankungsempfindlichen Verbrauchern R herabgesetzt.

Dadurch kann die Spannung Uₐᵤₛ aus den spannungsschwankungsempfindlichen Verbrauchern R unabhängig von der Bordnetzspannung Uₑᵢₙ auf eine konstante Spannung eingestellt werden.

In der Fig. 2 ist eine alternative Ausführungsform für die Einrichtung 1 zur Spannungsstabilisierung von spannungsschwankungsempfindlichen Verbrauchern R dargestellt. Die Einrichtung 1 umfaßt einen Transformator der durch eine Primärspule 8 und eine Sekundärspule 9 gebildet wird, wobei in Reihe zur Primärspule 8 ein taktbarer Leistungsschalter 10 angeordnet ist. In Reihe zur Sekundärspule 9 ist eine Diode 11 und die Parallelschaltung aus einem Kondensator 7 und den spannungsschwankungsempfindlichen Verbraucher R angeordnet. Über den Transformator sind die spannungsschwankungsempfindlichen Verbraucher R galvanisch von der Bordnetzspannung Uein entkoppelt. Durch die Taktung des Leistungsschalters 10 kann dann bedarfsgerecht in Abhängigkeit von der Bordnetzspannung Uₑᵢₙ eine Spannung in der Sekundärspule 9 erzeugt werden, die zu einer konstanten Spannung Uₐᵤₛ an den spannungsschwankungsempfindlichen Verbrauchern R führt.

## Patentansprüche

1. Bordnetz mit Spannungsstabilisierung, umfassend mindestens eine Spannungsquelle zur Versorgung von spannungsschwankungsunempfindlichen und spannungsschwankungsempfindlichen Verbrauchern, wobei zwischen den spannungsschwankungsempfindlichen Verbrauchern und der Spannungsquelle eine Einrichtung zur Spannungsstabilisierung angeordnet ist,
**dadurch gekennzeichnet, daß**
die Einrichtung (1) zur Spannungsstabilisierung Mittel zur Erfassung der Bordnetzspannung Uₑᵢₙ umfaßt, wobei über die Einrichtung (1) in Abhängigkeit von der erfaßten Bordnetzspannung Uₑᵢₙ Über- und Unterspannungen der Bordnetzspannung Uₑᵢₙ ausregelbar sind.

2. Bordnetz nach Anspruch 1, **dadurch gekennzeichnet, daß** die Einrichtung (1) als transformatorischer Wandler ausgebildet ist.

3. Bordnetz nach Anspruch 2, **dadurch gekennzeichnet, daß** in Reihe zur Primärspule (8) ein taktbarer Leistungsschalter (10) angeordnet ist, der in Abhängigkeit von der erfaßten Bordnetzspannung Uₑᵢₙ taktbar ist.

4. Bordnetz nach Anspruch 3, **dadurch gekennzeichnet, daß** der taktbare Leistungsschalter (10) als Halbleiterschalter ausgebildet ist.

5. Bordnetz nach Anspruch 4, **dadurch gekennzeichnet, daß** der Halbleiter als Feldeffekttransistor ausgebildet ist.

6. Bordnetz nach einem der Ansprüche 2 bis 5, **dadurch gekennzeichnet, daß** parallel zu den spannungsempfindlichen Verbrauchern R ein Glättungskondensator (7) oder Akkumulator angeordnet ist.

7. Bordnetz nach Anspruch 6, **dadurch gekennzeichnet, daß** in Reihe zur Sekundärspule (9) und den spannungsempfindlichen Verbrauchern R eine Diode (11) angeordnet ist.

8. Bordnetz nach Anspruch 1, **dadurch gekennzeichnet, daß** die Einrichtung (1) als Aufwärts- Abwärtswandler ausgebildet ist.

9. Bordnetz nach Anspruch 8, **dadurch gekennzeichnet, daß** eingangsseitig ein taktbarer Leistungsschalter (2) angeordnet ist, zu dem in Reihe eine Parallelschaltung aus Diode (3) mit einer Induktivität (4) mit taktbarem Leistungsschalter (5) angeordnet ist, wobei parallel zu den spannungsschwankungsempfindlichen Verbrauchern R ein Glättungskondensator (7) oder Akkumulator angeordnet ist und zwischen der Parallelschaltung und der Induktivität (4) eine Diode (6) angeordnet ist.

10. Bordnetz nach Anspruch 9, **dadurch gekennzeichnet, daß** die taktbaren Leistungsschalter (2, 5) als Halbleiterschalter ausgebildet sind.

11. Bordnetz nach Anspruch 10, **dadurch gekennzeichnet, daß** die Halbleiterschalter als Feldeffekttransistoren ausgebildet sind.
